# EUROPEAN PATENT APPLICATION

(11) **EP 4 592 800 A1**
(43) Date of publication of application: **30.07.2025**
(21) Application number: 24221256.1
(22) Date of filing: 18.12.2024
(51) Int. Cl.: G06F 3/01, G02B 27/01, G06F 3/04815

(54) **INFORMATION PROCESSING DEVICE THAT CONTROLS DISPLAY OF IMAGE, CONTROL METHOD OF INFORMATION PROCESSING DEVICE, SYSTEM, AND PROGRAM**

(30) Priority: 24.01.2024 JP 2024009057
(71) Applicant: CANON KABUSHIKI KAISHA, Tokyo 146-8501 (JP)
(72) Inventor: HIGETA, Tatsuya, Tokyo, 146-8501 (JP)
(74) Representative: Canon Europe Limited

(57) **Abstract**

An information processing device configured to communicate with a mobile terminal, the information processing device includes display control means for controlling a display to display a virtual space where a virtual screen associated with the mobile terminal is placed in a real space, and instruction acquisition means for acquiring an instruction to place the virtual screen associated with the mobile terminal in the virtual space, wherein the display control means is configured to change, in a case where a movement of the mobile terminal is detected, a position of the virtual screen associated with the mobile terminal within the virtual space is displayed to a position corresponds to a position of the mobile terminal, the movement of which is detected.

## Description

### BACKGROUND OF THE DISCLOSURE

### Field of the Disclosure

The present invention relates to an information processing device that controls the display of an image.

### Description of the Related Art

As a device for a user to experience mixed reality (MR), a head-mounted display (HMD) is used. Japanese Patent Application Laid-Open Publication No. 2022-113692 discusses a technique for displaying a virtual screen on an information processing device such as a head-mounted display and moving the virtual screen according to an operation of a user.

In recent years, there is a technique for connecting a personal computer (PC) to a head-mounted display and displaying a screen of the PC as a virtual object.

In a case where a plurality of virtual screens is displayed, there is an issue where the field of view of a user of an information processing device becomes cumbersome due to the virtual screens, and it is difficult for the user to operate the virtual screens.

### SUMMARY OF THE DISCLOSURE

In view of the above issue, the present invention is directed to improving the operability of a virtual screen for a user of an information processing device.

According to a first aspect of the present invention, there is provided an information processing device as specified in claim 1. Preferable features of the first aspect of the present invention are specified in claims 2 to 18. According to a second aspect of the present invention, there is provided an information processing device as specified in claim 19. Preferable features of the second aspect of the present invention are specified in claims 20 to 22. According to a third aspect of the present invention, there is provided a control method as specified in claim 23. According to a fourth aspect of the present invention, there is provided a program as specified in claim 24. Preferable features of the third aspect of the present invention may be specified in or derivable from claims 2 to 18 and claims 20 to 22. Preferable features of the fourth aspect of the present invention may be specified in or derivable from claims 2 to 18 and claims 20 to 22.

The display control means may be considered to change a position of the virtual screen associated with the mobile terminal within the virtual space in a case where a movement of the mobile terminal is detected or determined. The position of the virtual screen associated with the mobile terminal may be considered to corresponds to a position of the mobile terminal. Put another way, the position of the virtual screen associated with the mobile terminal in the virtual space changes when the position of the mobile terminal is changed in real space, this may be based on a detected or determined change of position of the mobile terminal.

Further features of the present disclosure will become apparent from the following description of embodiments with reference to the attached drawings.

### BRIEF DESCRIPTION OF THE DRAWINGS

Fig. 1A is a block diagram illustrating hardware configurations of a head-mounted display and a device according to a first embodiment. Fig. 1B is a schematic diagram illustrating the hardware configurations of the head-mounted display and the device according to the first embodiment.
Fig. 2A is a diagram illustrating an example of display according to the first embodiment. Fig. 2B is a diagram illustrating an example of display according to the first embodiment. Fig. 2C is a diagram illustrating an example of display according to the first embodiment.
Fig. 3A is an example of a data list according to the first embodiment. Fig. 3B is an example of a data list according to the first embodiment.
Fig. 4A is a diagram illustrating an example of display according to the first embodiment. Fig. 4B is a diagram illustrating an example of display according to the first embodiment. Fig. 4C is a diagram illustrating an example of display according to the first embodiment. Fig. 4D is a diagram illustrating an example of display according to the first embodiment. Fig. 4E is a diagram illustrating an example of display according to the first embodiment.
Fig. 5A is a flowchart illustrating processing of the head-mounted display according to the first embodiment. Fig. 5B is a flowchart illustrating processing of a mobile terminal according to the first embodiment.
Fig. 6 is a diagram illustrating an example of display according to the first embodiment.
Fig. 7 is a diagram illustrating an example of display according to a second embodiment.
Figs. 8A and 8B are a flowchart illustrating processing of a head-mounted display according to the second embodiment. Fig. 8C is a flowchart illustrating processing of a mobile terminal according to the second embodiment.

### DESCRIPTION OF THE EMBODIMENTS

Hereinafter, embodiments will be described in detail with reference to the accompanying drawings. The following embodiments do not limit the invention but rather the true scope of the invention is according to the appended claims. Although a plurality of features are described in the embodiments, all of the plurality of features are not necessarily essential to the invention, and the plurality of features may be arbitrarily combined. The embodiments and configuration described below can be implemented solely or as a combination of a plurality of elements or features thereof where necessary or where the combination of the elements or features from individual embodiments or configurations in a single embodiment or configuration is beneficial. In the accompanying drawings, the same or similar components are denoted by the same reference numerals, and the redundant descriptions will be omitted.

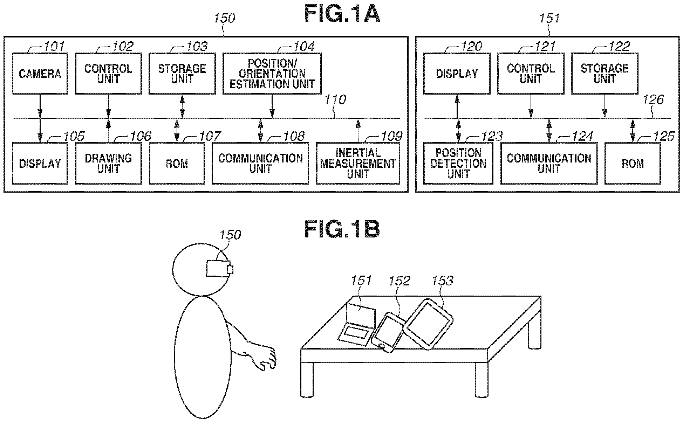

Fig. 1A is a block diagram illustrating the hardware of an information processing system according to a first embodiment. The information processing system includes an information processing device to be worn on the head and a mobile terminal.

Fig. 1A illustrates a head-mounted display (HMD) 150 that is an information processing device to be worn on the head, and a mobile terminal 151 that is a device used by connecting the device to the head-mounted display 150, such as a personal computer (PC), a tablet, or a smartphone.

### <Internal Configuration of HMD>

With reference to Fig. 1A, the internal configuration of the HMD 150 is described.

A camera 101 is an imaging unit fixed to a housing of the HMD 150. The camera 101 is image acquisition means for capturing a space in front of the camera 101 to acquire a captured image representing a real space that is a three-dimensional space. For example, the camera 101 includes two cameras, namely a left-eye camera and a right-eye camera. The two cameras capture captured images to be used to be combined with an image of a virtual space and generate position/orientation information, and include a left-eye imaging unit and a right-eye imaging unit. The left-eye imaging unit captures a moving image of the real space corresponding to the left eye of a wearer of the HMD 150 and outputs an image (a captured image) of each frame in the moving image. The right-eye imaging unit captures a moving image of the real space corresponding to the right eye of the wearer of the HMD 150 and outputs an image (a captured image) of each frame in the moving image. That is, the camera 101 acquires a captured image as a stereo image having a parallax approximately matching the positions of the left eye and the right eye of the wearer of the HMD 150. By measuring a distance using this stereo camera, information regarding the distance from the two cameras to a subject is acquired as distance information. It is desirable that in the HMD 150 for a mixed reality (MR) system, the center optical axis of the imaging range of each imaging unit be placed to approximately match the line-of-sight direction of the wearer of the HMD 150.

Each of the left-eye imaging unit and the right-eye imaging unit includes an optical system and an imaging device.

Light entering each imaging unit from the external world enters the imaging device through the optical system, and the imaging device outputs an image according to the light entering the imaging device as a captured image. The imaging unit may capture a video instead of a captured image and output the video.

In the camera 101, a line-of-sight imaging unit that captures the line of sight of a user may be provided. The line-of-sight imaging unit is a camera that acquires an image for detecting the line of sight of the user, and is a line-of-sight acquisition method attached to the inside of the HMD 150 to capture the eyes of the user when the user wears the HMD 150. An image obtained by the camera 101 capturing a subject (the eyes of the user) is output to a control unit 102. The control unit 102 detects the line of sight of the user wearing the HMD 150 from an image captured by the line-of-sight imaging unit and identifies a portion of a display 105 at which the user gazes.

The control unit 102 is a central processing unit (CPU) that controls the components of the HMD 150. In response to the control unit 102 acquiring a combined image (an image obtained by combining captured images obtained by the imaging units capturing a space in front of the user and computer graphics (CG)) from a drawing unit 106, the control unit 102 performs display control for displaying the combined image on the display 105. Instead of the control unit 102 of the HMD 150 controlling the entire device, a plurality of pieces of hardware may share processing to control the entire device.

A storage unit 103 is a memory used as a work memory for the control unit 102 or the drawing unit 106 and used as a place where a captured image captured by the camera 101 is held. The storage unit 103 is also used as a place where various pieces of data are held. The storage unit 103 also stores a program for an application installed on the HMD 150.

A position/orientation estimation unit 104 estimates the position and orientation of the camera 101 at the time when a camera image of the camera 101 input to the storage unit 103 is captured. In the present embodiment, for example, the position/orientation estimation unit 104 estimates the position and orientation using a technique for estimating the position and orientation of a camera itself, such as simultaneous localization and mapping (SLAM). The position/orientation estimation unit 104 may be able to estimate the position of the camera 101 itself by visual SLAM for estimating the position of a camera itself from a video of the camera, or light detection and ranging (lidar) SLAM using laser. The position/orientation estimation unit 104 may be able to estimate the position of the camera 101 itself by depth SLAM using a time-of-flight (ToF) sensor.

For example, by using lidar SLAM, the position/orientation estimation unit 104 estimates the position and the orientation of the HMD 150 even in a dark place, and therefore, it is possible to display a virtual screen according to the positional relationship between a mobile terminal and the HMD 150 even in a dark place.

The display 105 is a display unit that displays a combined image generated by the drawing unit 106. The display 105 is placed at a position where the display 105 is visible to both eyes of the user and near both eyes.

The drawing unit 106 is a graphics processing unit (GPU). The drawing unit 106 draws CG data on a captured image stored in the storage unit 103 to generate a combined image. The drawing unit 106 also draws information such as a ray that is a virtual light ray to be displayed on the display 105 and indicating an indicated position.

A read-only memory (ROM) 107 is an electrically erasable and recordable non-volatile memory. The ROM 107 stores various programs such as a program for the entire operation of the HMD 150 and a processing program, and the various programs are executed by the control unit 102.

For example, a communication unit 108 is composed of an antenna for wireless communication, a modulation/demodulation circuit for processing a wireless signal, and a communication controller to transmit and receive data to and from the mobile terminal 151. The communication unit 108 outputs a modulated wireless signal from the antenna and demodulates a wireless signal received by the antenna, whereby short-range wireless communication according to the Institute of Electrical and Electronics Engineers (IEEE) 802.15 standard (so-called Bluetooth^{®} ) is achieved. The communication unit 108 may perform wired communication using a Universal Serial Bus (USB) cable (registered trademark) or wireless communication using Wireless Fidelity (Wi-Fi) (registered trademark). Similarly, the communication unit 108 may also transmit and receive data to and from a mobile terminal 152 and a mobile terminal 153, and may also further transmit and receive data to and from another device.

An inertial measurement unit 109 is a sensor for detecting the position or the orientation of the HMD 150. Then, the inertial measurement unit 109 acquires position information or orientation information regarding the user (the user wearing the HMD 150) corresponding to the position or the orientation of the HMD 150. The inertial measurement unit 109 includes an inertial measurement unit (IMU) composed of an inertial sensor such as an acceleration sensor or an angular acceleration sensor. The inertial measurement unit 109 is used to acquire the position information or the orientation information regarding the user, and the control unit 102 acquires the position information or the orientation information regarding the user from the inertial measurement unit 109. The inertial measurement unit 109 may be able to detect only the orientation information, or may be able to detect only the position information, or may be able to detect both the orientation information and the position information. More specifically, the inertial measurement unit 109 may be able to detect at least one of the orientation information and the position information. The inertial measurement unit 109 may include a geomagnetic sensor that is a sensor for detecting the bearing of the HMD 150. The control unit 102 acquires information regarding the bearing of the HMD 150 from the geomagnetic sensor.

To an internal bus 110, the camera 101, the control unit 102, the storage unit 103, the position/orientation estimation unit 104, the display 105, the drawing unit 106, the ROM 107, the communication unit 108, and the inertial measurement unit 109 are connected. The components connected to the internal bus 110 exchange data with each other via the internal bus 110.

The HMD 150 may connect in a wired or wireless manner to a PC that mainly performs image processing, and the PC may have at least some of the above functions.

An output unit (not illustrated) may be provided in such a manner that the output unit outputs a sound, a vibration, and light. Particularly, in a case where the position of a virtual screen is changed, a vibration may be transmitted to the user. The vibration is transmitted to the user, whereby the user can feel that the user moves the virtual screen.

### <Internal Configuration of Mobile Terminal>

With reference to Fig. 1A, the internal configuration of the mobile terminal 151 is described. The mobile terminals 152 and 153 have configurations similar to that of the mobile terminal 151, and are not described.

A display 120 is a display unit that displays a screen according to an application selected in the mobile terminal 151.

A control unit 121 is a CPU that controls the components of the mobile terminal 151.

A storage unit 122 is a memory that holds various pieces of data. The storage unit 122 also stores a program for an application installed on the mobile terminal 151.

A position detection unit 123 detects the position of the mobile terminal 151 using the Global Positioning System (GPS) or an inertial measurement unit (IMU) as described above. The position/orientation estimation unit 104 of the HMD 150 may detect the position of the mobile terminal 151 from a captured image.

A communication unit 124 has a configuration similar to that of the communication unit 108 and transmits and receives data to and from the HMD 150.

A ROM 125 is an electrically erasable and recordable non-volatile memory. The ROM 125 stores various programs such as a program for the entire operation of the mobile terminal 151 and a processing program, and the various programs are executed by the control unit 121.

To an internal bus 126, the display 120, the control unit 121, the storage unit 122, the position detection unit 123, the communication unit 124, and the ROM 125 are connected. The components connected to the internal bus 126 exchange data with each other via the internal bus 126.

Fig. 1B illustrates a schematic diagram of the state where the HMD 150 worn on the head of the user and the mobile terminals 151, 152, and 153 placed on a table are connected together in the configuration in Fig. 1A. The mobile terminals 152 and 153 have hardware configurations similar to that of the mobile terminal 151.

### <Examples of Screens of Head-Mounted Display>

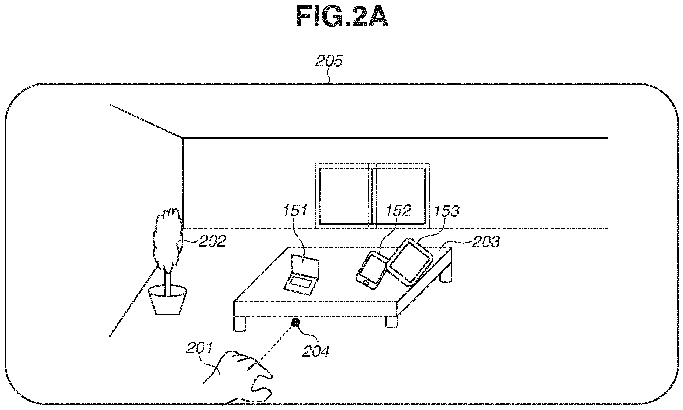

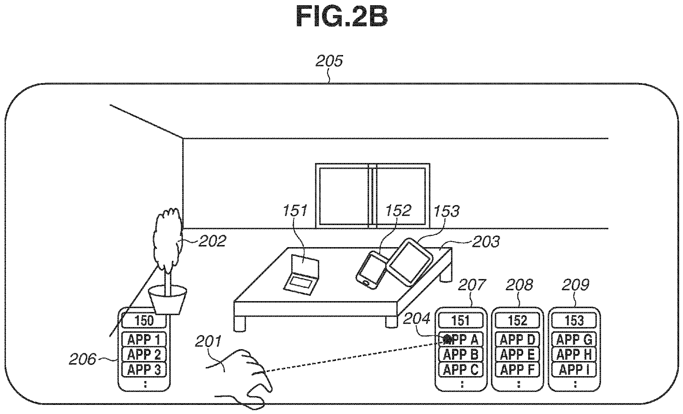

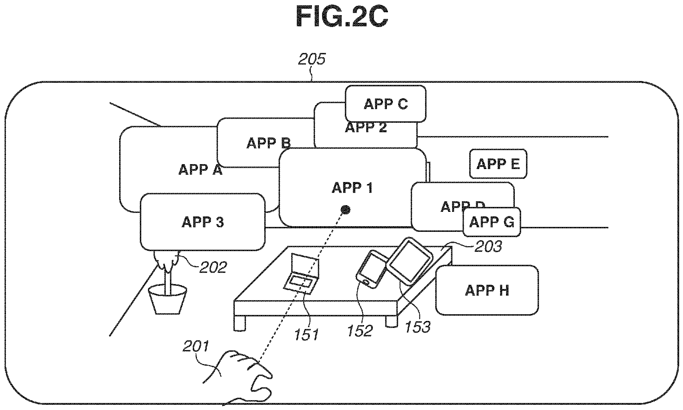

Figs. 2A, 2B, and 2C are diagrams illustrating the scenes where the mobile terminals 151, 152, and 153 are connected to the HMD 150. Figs. 2A, 2B, and 2C illustrate the states where the display 105 of the HMD 150 displays applications of the HMD 150 and applications of the mobile terminals 151, 152, and 153. Although the embodiments shown and described refer to three mobile terminals, it is possible for more or less mobile terminals to be provided.

Fig. 2A illustrates the state of the display of the display 105 in the state where the HMD 150 is started and a video of the real space is visible. A combined image 205 is a video displayed on the display 105 and represents the space of the field of view visible to the user wearing the HMD 150. A tree 202 and a table 203 are real objects. A hand 201 is the hand of the user, and the hand of the user wearing the HMD 150 is visible. A virtual object 204 is a virtual line (ray) emitted from the hand of the user. The user specifies and operates a target with the end of the ray 204.

Fig. 2B illustrates the state of the display of the display 105 in the state where the mobile terminals 151, 152, and 153 are connected to the HMD 150 from the state in Fig. 2A, and the state immediately before the mobile terminals 151, 152, and 153 start applications of the mobile terminals 151, 152, and 153. A virtual object 206 is information regarding a list of applications included in the HMD 150 and may be displayed when the HMD 150 starts. A virtual object 207, a virtual object 208, and a virtual object 209 are lists of applications included in the respective connected devices. The user selects and determines applications to be started, using the ray 204. That is to say, a virtual object 207, 208, 209 is provided for each connected device, e.g. mobile terminal, with each virtual object comprising a list of applications included in the respective connected device.

Fig. 2C illustrates the state of the display of the display 105 in the state where applications are started from the state in Fig. 2B and the user operates the applications. After starting of the applications, the user can freely operate the applications. This example illustrates an operation in which the user operates the applications using the ray 204.

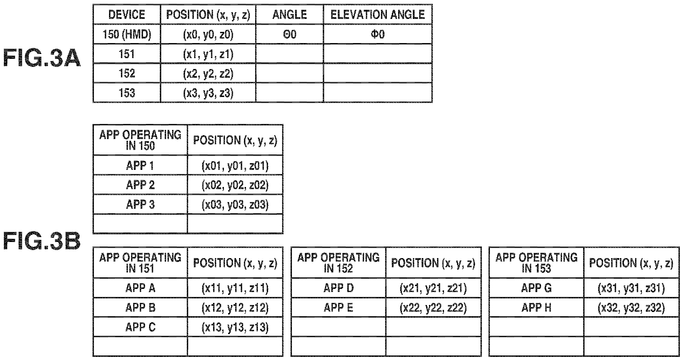

Figs. 3A and 3B illustrate data lists for managing the positional relationships among the HMD 150 and the mobile terminals 151, 152, and 153 according to the present embodiment and determining the placement locations of the started apps.

Fig. 3A illustrates information regarding the position of the HMD 150, information regarding an angle and an elevation angle indicating where the HMD 150 is directed, and position information indicating where the mobile terminals 151, 152, and 153 are. This information is updated in response to the HMD 150 moving or changing its orientation, and is similarly updated in response to movement of the mobile terminals 151, 152, and 153 move. Each of the fields of the mobile terminals 151, 152, and 153 in Fig. 3A is registered in response to the mobile terminal connecting to the HMD 150, and is deleted in response to the mobile terminal disconnecting from the HMD 150.

Fig. 3B illustrates the applications operating in the HMD 150 and the mobile terminals 151, 152, and 153 and the placement position of each application in the space of the HMD 150. In a case where the user moves an application, the placement position of the moved application is updated. Each of the fields of the operating apps in Fig. 3B is registered in response to the start of the application, and is deleted in response to the end of the application.

The origin of the coordinates of the positions in Figs. 3A and 3B may be at any position. For example, the position where the HMD 150 is started may be fixed as the origin. This is applicable as long as the coordinate axes of the position coordinates of the mobile terminals 151, 152, and 153 coincide with the coordinate axes of the HMD 150.

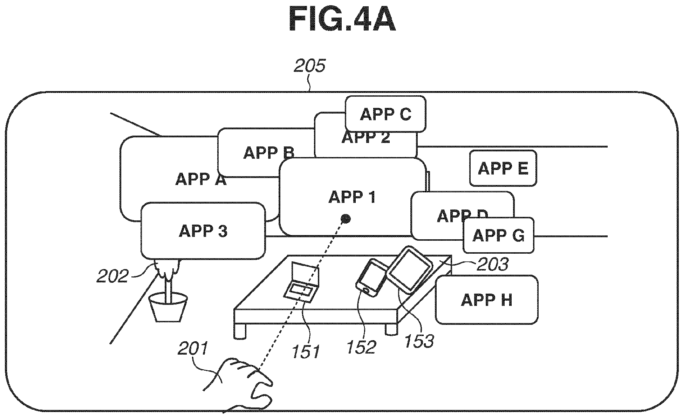

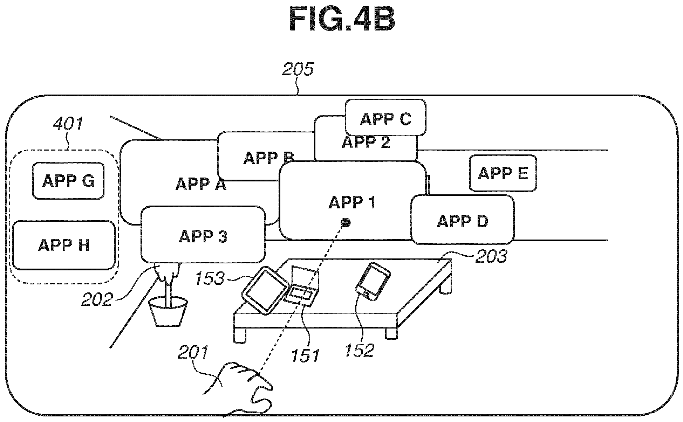

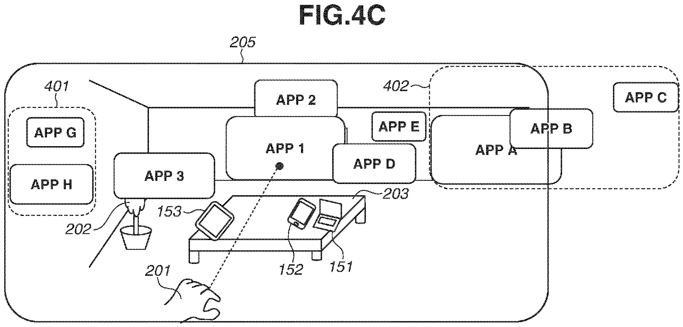

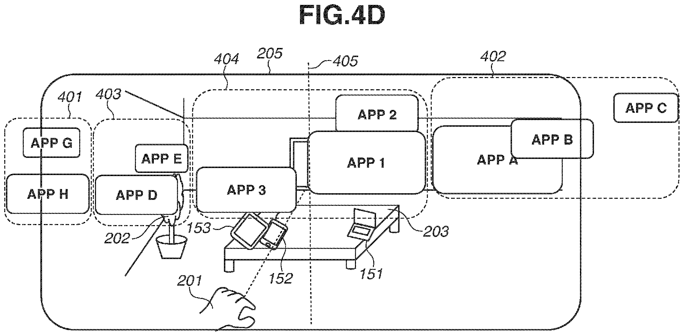

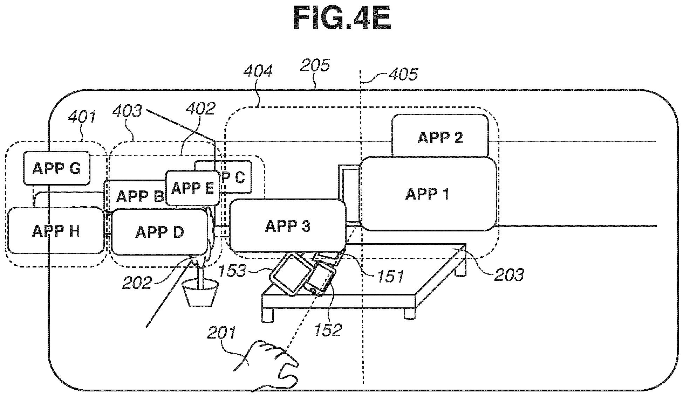

Figs. 4A, 4B, 4C, 4D, and 4E illustrate virtual screens displayed on the display 105 of the HMD 150. Figs. 4A, 4B, 4C, 4D, and 4E illustrate the states where the virtual screens are moved by moving the mobile terminals 151, 152, and 153.

Fig. 4A illustrates the same state as that in Fig. 2C.

Fig. 4B illustrates the state of the display of the virtual screens when the mobile terminal 153 is moved to the left of the mobile terminal 151 from the state in Fig. 4A. A virtual screen 401 is a virtual screen group regarding applications including an application (app) G and an app H operating in the mobile terminal 153. That is to say that a virtual screen may be considered to comprises a single virtual screen, for example a single screen element such as a screen associated with the app, or a plurality of virtual screens, for example, a plurality of screen elements where each screen element of the plurality of screen elements corresponds with a screen associated with a specific app. In a case where the mobile terminal 153 moves, the virtual screen group 401 moves to the left of an app A which is in the leftmost position among the applications operating in the mobile terminal 151. More specifically, in response to the movement of the mobile terminal 153, the control unit 102 of the HMD 150 performs control in such a manner that virtual screens regarding (associated with) the mobile terminal 153 move based on the positional relationship between the mobile terminals 151 and 153.

In this case, according to the movement of a mobile terminal, the positions of virtual screens are changed in such a manner that the virtual screens come close to the moved mobile terminal. The virtual screens may be moved in such a manner that the virtual screens move together with the movement of the mobile terminal when viewed from the user. After the movement of the mobile terminal is completed and at the timing when the mobile terminal is at rest for a predetermined time, the positions of the virtual screens may be brought close to the mobile terminal. For example, in a case of providing a view in such a manner that the virtual screens move together with the movement of the mobile terminal when viewed from the user, based on the position of the mobile terminal in a captured image with respect to each frame, the positions of the virtual screens are determined in such a manner that the positions of the virtual screens are closer to the mobile terminal than the positions of the virtual screen in the previous frame.

Fig. 4C illustrates the state of the display of the virtual screens when the mobile terminal 151 is moved to the right of the mobile terminal 152 from the state in Fig. 4B. A virtual screen 402 is a virtual screen group regarding (associated with) applications including the app A, an app B, and an app C operating in the mobile terminal 151. In response to the movement of the mobile terminal 151, the virtual screen group 402 moves to the right of an app E which is in the rightmost position among the applications operating in the mobile terminal 152. More specifically, in response to the movement of the mobile terminal 151, the control unit 102 of the HMD 150 performs control in such a manner that the virtual screens regarding (associated with) the mobile terminal 151 move based on the positional relationship between the mobile terminals 151 and 152.

Fig. 4D illustrates the state of the display of the virtual screens when the mobile terminal 152 is moved to the immediate right of the mobile terminal 153 from the state in Fig. 4C. A virtual screen 403 is a virtual screen group regarding (associated with) applications including an app D and the app E operating in the mobile terminal 152. In response to the movement of the mobile terminal 152, the virtual screen group 403 moves to the right of the virtual screen group 401. On the right of the virtual screen group 401, a virtual screen group 404 regarding (associated with) applications including an app 1, an app 2, and an app 3 operating in the HMD 150 is present. Thus, the virtual screen group 404 is placed about a center line 405 of the HMD 150, and the virtual screen groups 401, 402, and 403 are placed not to overlap the virtual screen group 404. This is an operation performed on the assumption that the HMD 150 is placed on the center line 405 between the mobile terminals 152 and 151.

In a case where virtual screens of each of a plurality of mobile terminals are displayed, a mode of organizing the virtual screens may be provided. In this case, according to the positional relationships among the mobile terminals in the real space determined by the user during a predetermined time, each virtual screen group may be displayed as a cluster of the virtual screens regarding (associated with) the corresponding mobile terminal. For example, the user changes the current mode to the mode of organizing the virtual screens and moves the positions of the mobile terminals in the order of the state in Fig. 4A, the state in Fig. 4B, and the state in Fig. 4C. The user gives an instruction to complete the mode of organizing the virtual screens. In a case where the control unit 102 receives the instruction to complete the mode of organizing the virtual screens, the control unit 102 organizes the virtual screens to achieve the display of the virtual screens in the state in Fig. 4C. In a case where the virtual screens are organized as described above, the virtual screens do not move according to the movement of each of the plurality of mobile terminals, and the display position of each cluster of virtual screens is determined according to the positional relationships among the mobile terminals at a predetermined time.

The applications operating in the HMD 150 may be considered different from the applications operating in the mobile terminals 151, 152, and 153. For example, when the mobile terminal 151 is moved to the immediate right of the mobile terminal 153 from the state in Fig. 4C, the virtual screen groups 401 and 402 may not be moved, and the virtual screen group 403 may be placed on the right of the virtual screen group 401 even in a case where the virtual screen group 403 overlaps the virtual screen group 404.

Fig. 4E illustrates the state of the display of the display 105 when the mobile terminal 151 is moved to the back of the mobile terminal 152 from the state in Fig. 4D. The virtual screen group 402 operating in the mobile terminal 151 moves to the back of the virtual screen group 403 operating in the mobile terminal 152.

In the examples of Figs. 4A, 4B, 4C, 4D, and 4E, a virtual screen group moves without changing the positional relationships among the virtual screens in the virtual screen group. Alternatively, for example, in a case where a virtual screen group moves, the virtual screens in the virtual screen group may be placed on a line in the depth direction, or may be placed on a line in the horizontal direction. In a case where the virtual screens are placed on a line, the applications may overlap each other.

In a case where the applications overlap each other, the front/back relationships among the applications before the movement may be maintained, or an application to which the line of sight of the user is directed last may be placed in front. The placement of the applications may be based on the priorities of the applications determined in advance, for example, such that a table application has the highest priority and a text application has the second highest priority. The placement of the applications may be determined with respect to the colors of the applications. The front/back relationships among the applications indicate relationships indicating which virtual screen is in the front position (in the position near the user) and which virtual screen is in the back position (in the position far from the user).

### <Process of Placing Virtual Screens>

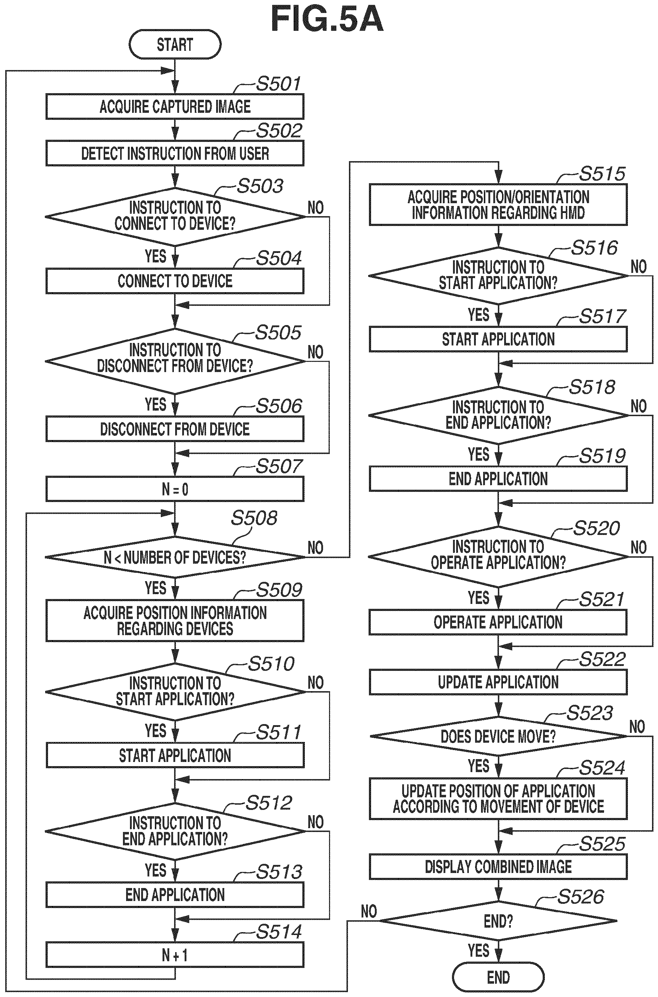

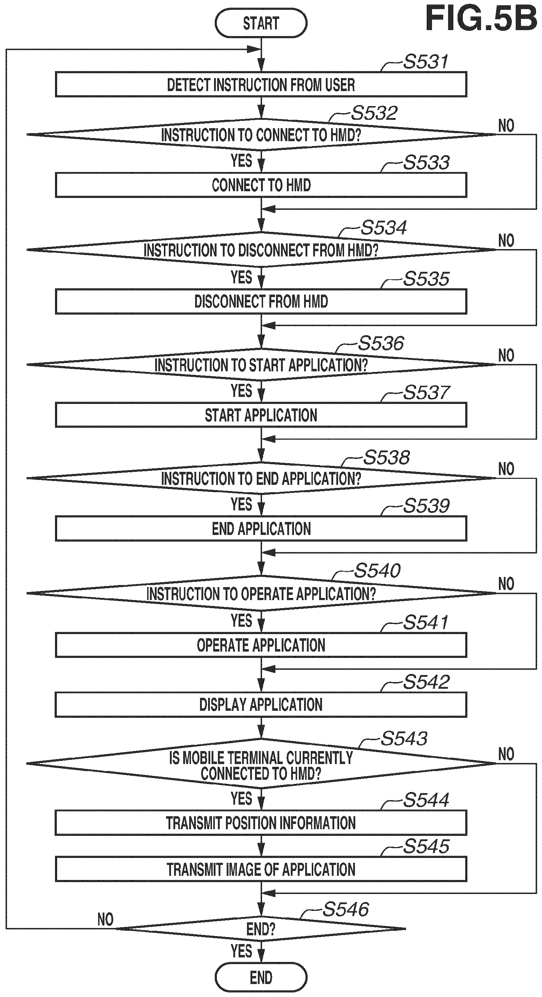

Figs. 5A and 5B are flowcharts illustrating the details of processing according to the present embodiment. Fig. 5A is a flowchart of the HMD 150. Fig. 5B is a flowchart of the mobile terminals 151, 152, and 153.

The start of the HMD 150 and the mobile terminals 151, 152, and 153 according to the present embodiment is completed.

With reference to Fig. 5A, the processing of the HMD 150 is described.

In step S501, the control unit 102 controls the camera 101 to acquire a captured image (a stereo camera image) and store the captured image in the storage unit 103, and the processing proceeds to step S502.

In step S502, the control unit 102 detects the hand of the user from the stereo camera image stored in step S501 and also monitors a position indicated by the ray 204, whereby information regarding what instruction the user gives is determined. Then, the processing proceeds to step S503. The hand of the user may be detected by performing image recognition on stereo image data of the stereo camera image. The control unit 102 may compare the position of the detected hand of the user and the position of the hand of the user in the past and determine information regarding whether the user attempts to move a device or whether the user presses a determination button. The control unit 102 may determine a target of the instruction based on the position indicated by the ray 204.

In step S503, the control unit 102 determines whether an instruction to connect to a device (a mobile terminal) is given by the user in step S502. In a case where the control unit 102 determines that an instruction to connect to a device is given (YES in step S503), the processing proceeds to step S504. In a case where the determination is not (NO in step S503), the processing proceeds to step S505. An instruction to connect to a device is determined by displaying candidates for a device to which to connect and a connection button in advance and detecting that the ray 204 indicated by the user presses the connection button. The communication unit 108 may automatically detect a device to which the HMD 150 is able to connect, and may detect that the user presses a permission button.

In step S504, the control unit 102 controls the communication unit 108 to connect to the device, and the processing proceeds to step S505. The control unit 102 registers the device to which the HMD 150 is connected in the data list in Fig. 3A. When the HMD 150 connects to the device, the control unit 102 may display a list of applications that are able to be started as in the virtual objects 207, 208, and 209 in Fig. 2B on the display 105.

In step S505, the control unit 102 determines whether an instruction to disconnect from a device is given by the user in step S502. In a case where the control unit 102 determines that an instruction to disconnect from a device is given (YES in step S505), the processing proceeds to step S506. In a case where the determination is not (NO in step S505), the processing proceeds to step S507. An instruction to disconnect from a device is determined by detecting that the user presses a device disconnection button.

In step S506, the control unit 102 controls the communication unit 108 to disconnect from the device for which the device disconnection instruction is given, and the processing proceeds to step S507. The control unit 102 deletes the device from which the HMD 150 is disconnected from the data list in Fig. 3A.

In step S507, the control unit 102 sets a device count number N to 0, and the processing proceeds to step S508.

In step S508, the control unit 102 compares the number of devices to which the HMD 150 is connected and the device count number N, and in a case where N is less than the number of devices to which the HMD 150 is connected (YES in step S508), the processing proceeds to step S509. In a case where the determination is not (NO in step S508), the processing proceeds to step S515.

In step S509, the control unit 102 controls the communication unit 108 to acquire position information regarding the devices to which the HMD 150 is connected, and the processing proceeds to step S510.

In step S510, the control unit 102 determines whether an instruction to start an application is given to any of the devices to which the HMD 150 is connected by the user in step S502. In a case where the control unit 102 determines that an instruction to start an application is given (YES in step S510), the processing proceeds to step S511. In a case where the determination is not (NO in step S510), the processing proceeds to step S512.

In step S511, the control unit 102 controls the communication unit 108 to transmit an instruction to start the application to the device to which the HMD 150 is connected, and the processing proceeds to step S512. The control unit 102 registers the application for which the start instruction is given in an operating app field of the corresponding device in the data list in Fig. 3B. The position where the application is placed may be any position, and for example, may be a position in front of the HMD 150.

In step S512, the control unit 102 determines whether an instruction to end an application is given to any of the devices by the user in step S502. In a case where the control unit 102 determines that an instruction to end an application is given (YES in step S512), the processing proceeds to step S513. In a case where the determination is not (NO in step S512), the processing proceeds to step S514.

In step S513, the control unit 102 controls the communication unit 108 to transmit an instruction to end the application to the device to which the HMD 150 is connected, and the processing proceeds to step S514. The control unit 102 deletes the application for which the end instruction is given from an operating app field of the corresponding device in the data list in Fig. 3B.

In step S514, the control unit 102 adds 1 to the device count number N, and the processing returns to step S508.

In step S515, the control unit 102 controls the position/orientation estimation unit 104 to acquire position/orientation information regarding the HMD 150 held in the storage unit 103, and the processing proceeds to step S516. The position/orientation information is information regarding the position and the orientation in Fig. 3A. The orientation may be the angle and the elevation angle.

In step S516, the control unit 102 determines whether an instruction to start an application is given to the HMD 150 by the user in step S502. In a case where the control unit 102 determines that an instruction to start an application is given (YES in step S516), the processing proceeds to step S517. In a case where the determination is not (NO in step S516), the processing proceeds to step S518.

In step S517, the control unit 102 starts the application, and the processing proceeds to step S518. The application is started by the control unit 102 reading a corresponding application program from the storage unit 103.

In step S518, the control unit 102 determines whether an instruction to end an application is given to the HMD 150 by the user in step S502. In a case where the control unit 102 determines that an instruction to end an application is given (YES in step S518), the processing proceeds to step S519. In a case where the determination is not (NO in step S518), the processing proceeds to step S520.

In step S519, the control unit 102 ends the application, and the processing proceeds to step S520.

In step S520, the control unit 102 determines whether an instruction to operate an application is given in step S502. In a case where the control unit 102 determines that an instruction to operate an application is given (YES in step S520), the processing proceeds to step S521. In a case where the determination is not (NO in step S520), the processing proceeds to step S522.

In step S521, the control unit 102 operates the application according to the instruction to operate the application acquired in step S502, and the processing proceeds to step S522. In a case where the operation on the application is an operation on an application of the HMD 150, the control unit 102 controls the application. In a case where the operation on the application is an operation on an application of a device, the control unit 102 controls the communication unit 108 to transmit an instruction to operate the application to the device.

In step S522, the control unit 102 updates the application, and the processing proceeds to step S523. In a case where the application is operated in step S521, the control unit 102 updates an image of the application including the result of the operation and holds the image in the storage unit 103. In the device, after the control unit 102 controls the communication unit 108, the device receives an image of the application and holds the image in the storage unit 103. In a case where the operation on the application involves the movement of the application, the control unit 102 updates the position of the corresponding application in the data list in Fig. 3B.

In step S523, based on the position information regarding the devices acquired in step S509, the control unit 102 determines whether any of the devices moves. In a case where the control unit 102 determines that any of the devices moves (YES in step S523), the processing proceeds to step S524. In a case where the determination is not (NO in step S523), the processing proceeds to step S525.

In step S524, the control unit 102 updates the position of an application according to the movement of the device, and the processing proceeds to step S525. The update of the position of the application is achieved by updating the data list in Fig. 3B. For example, in a case where the mobile terminal 153 moves to the left of the mobile terminal 151, the virtual screens regarding (associated with) the mobile terminal 153 in Fig. 4B moves in such a manner that the virtual screens regarding (associated with) the mobile terminal 153 are on the left of the virtual screen which is in the leftmost position among the virtual screens regarding (associated with) the mobile terminal 151. More specifically, the apps G and H of the mobile terminal 153 move in such a manner that the apps G and H are on the left of the application which is in the leftmost position among the apps A, B, and C of the mobile terminal 151. While the sizes of the screens of the applications are omitted in the data list in Fig. 3B, in a case where the sizes are also factored in, the applications are moved with high accuracy in such a manner that, for example, the applications do not overlap each other. That is, the control of the movements of the applications is performed by monitoring and updating the data list in Fig. 3B.

In step S525, the drawing unit 106 reads the image of the application held in the storage unit 103 and draws the read image at a position according to the data list in the captured image. Further, the drawing unit 106 draws the ray 204 at a position based on the position of the hand of the user, and the display 105 displays a combined image of the captured image and the application and the ray 204. Then, the processing proceeds to step S526.

In step S526, the control unit 102 determines whether to end the processing of the present embodiment. In a case where the control unit 102 determines that the processing is to be ended (YES in step S526), the processing ends. In a case where the determination is not (NO in step S526), the processing returns to step S501. The determination of whether to end the processing is performed based on whether an end instruction from the user is acquired in step S502.

### <Processing of Mobile Terminals>

The processing of the mobile terminals 151, 152, and 153 is described. The mobile terminals 151, 152, and 153 perform similar processing, and Fig. 5B illustrates the processing of any of the mobile terminals 151, 152, and 153.

In step S531, the control unit 121 controls the communication unit 124 to acquire an instruction from the user, and the processing proceeds to step S532. The instruction from the user includes the instruction transmitted from the HMD 150 in step S511, S513, or S521.

In step S532, the control unit 121 determines whether the instruction from the user acquired in step S531 is an instruction to connect to the HMD 150. In a case where the control unit 121 determines that the instruction from the user is an instruction to connect to the HMD 150 (YES in step S532), the processing proceeds to step S533. In a case where the determination is not (NO in step S532), the processing proceeds to step S534. This is based on the transmission of a connection instruction in the connection process in step S504 in the HMD 150.

In step S533, the control unit 121 controls the communication unit 124 to connect to the HMD 150, and the processing proceeds to step S534. The control unit 121 controls the communication unit 124 to transmit information regarding a list of applications that are able to be started as in the virtual objects 207, 208, and 209 in Fig. 2B to the HMD 150.

In step S534, the control unit 121 determines whether the instruction from the user acquired in step S531 is an instruction to disconnect from the HMD 150. In a case where the control unit 121 determines that the instruction from the user is an instruction to disconnect from the HMD 150 (YES in step S534), the processing proceeds to step S535. In a case where the determination is not (NO in step S534), the processing proceeds to step S536. This is based on the transmission of a disconnection instruction in the disconnection process in step S506 in the HMD 150.

In step S535, the control unit 121 controls the communication unit 124 to disconnect from the HMD 150, and the processing proceeds to step S536.

In step S536, the control unit 121 determines whether the instruction from the user acquired in step S531 is an instruction to start an application. In a case where the control unit 121 determines that the instruction from the user is an instruction to start an application (YES in step S536), the processing proceeds to step S537. In a case where the determination is not (NO in step S536), the processing proceeds to step S538. This is based on the transmission of an app start instruction in the app start process in step S511 in the HMD 150.

In step S537, the control unit 121 starts the application, and the processing proceeds to step S538. The application is started by the control unit 121 reading an application program from the storage unit 122.

In step S538, the control unit 121 determines whether the instruction from the user acquired in step S531 is an instruction to end an application. In a case where the control unit 121 determines that the instruction from the user is an instruction to end an application (YES in step S538), the processing proceeds to step S539. In a case where the determination is not (NO in step S538), the processing proceeds to step S540. This is based on the transmission of an app end instruction in the app end process in step S513 in the HMD 150.

In step S539, the control unit 121 ends the application, and the processing proceeds to step S540.

In step S540, the control unit 121 determines whether the instruction from the user acquired in step S531 is an instruction to operate an application. In a case where the control unit 121 determines that the instruction from the user is an instruction to operate an application (YES in step S540), the processing proceeds to step S541. In a case where the determination is not (NO in step S540), the processing proceeds to step S542. This is based on the transmission of an app operation instruction in the app operation process in step S521 in the HMD 150.

In step S541, the control unit 121 operates the application, and the processing proceeds to step S542. The control unit 121 holds an image of the operated application in the storage unit 122.

In step S542, the control unit 121 reads the image of the application held in step S541, and the display 120 displays the read image. Then, the processing proceeds to step S543.

In step S543, the control unit 121 determines whether the mobile terminal is currently connected to the HMD 150. In a case where the control unit 121 determines that the mobile terminal is currently connected to the HMD 150 (YES in step S543), the processing proceeds to step S544. In a case where the determination is not (NO in step S543), the processing proceeds to step S546.

In step S544, the control unit 121 controls the position detection unit 123 to acquire position information and controls the communication unit 124 to transmit the position information. Then, the processing proceeds to step S545.

In step S545, the control unit 121 reads an image of the latest operating application from the storage unit 122 and controls the communication unit 124 to transmit the image. Then, the processing proceeds to step S546.

In step S546, the control unit 121 determines whether to end the processing of the device according to the present embodiment. In a case where the control unit 121 determines that the processing is to be ended (YES in step S546), the processing ends. In a case where the determination is not (NO in step S546), the processing returns to step S531. The determination of whether to end the processing is performed based on whether an end instruction from the user is acquired in step S531.

### <How to Display Virtual Screens>

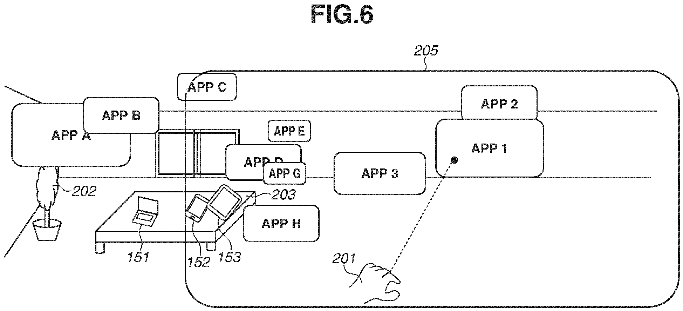

Fig. 6 illustrates the state of the display of the display 105 when the direction of the HMD 150 is changed in the right direction from the state in Fig. 2C. In this case, the positions of the applications operating in the mobile terminals 151, 152, and 153 do not move, and only the apps 1, 2, and 3 that are the applications operating in the HMD 150 move.

This is the situation where in step S524, the position and the elevation angle of the HMD 150 do not change and only the angle of the HMD 150 changes in Fig. 4A, and the positions of the mobile terminals 151, 152, and 153 do not change. In this case, only the apps 1, 2, and 3 in the operating app fields of the HMD 150 in Fig. 3B may be moved by amounts corresponding to the change in the angle.

In the present embodiment, when any of the mobile terminals 151, 152, and 153 is moved to the outside of the field of view of the HMD 150, the applications operating in the moved device may be moved to the end of the screen. For example, the outside of the field of view of the HMD 150 is the outside of the imaging range of the camera 101, and may be the outside of the imaging range of a camera that acquires a video to be viewed by the user, or may be the outside of the imaging range of a camera that acquires a video for acquiring the position and the orientation of the HMD 150. When the mobile terminal is moved to the outside of the field of view of the HMD 150, the virtual screens may be moved to the back surface of another virtual screen (the position far from the user), or may be hidden. The hidden virtual screens may be displayed in response to the corresponding device being returned to the inside of the field of view. The hiding may be erased or may be minimization.

In the present embodiment, in a case where the screen of any of the mobile terminals 151, 152, and 153 is faced down, i.e., in a case where the display portion of any of the mobile terminals 151, 152, and 153 is hidden, the applications operating in the mobile terminal may be erased. The determination of whether the screen is faced down may be performed by determining the direction of the mobile terminal based on a captured image. In response to the screen being faced up, i.e., in response to the display portion being visible, the erased applications are displayed again.

In a case where any of the mobile terminals 151, 152, and 153 is foldable, in response to the mobile terminal being folded, the applications operating in the mobile terminal may be erased.

In a second embodiment, a description is given of a method for determining the placement of applications operating in a device further based on whether the user wearing the HMD 150 holds the device in their hand or wears the device in addition to the first embodiment.

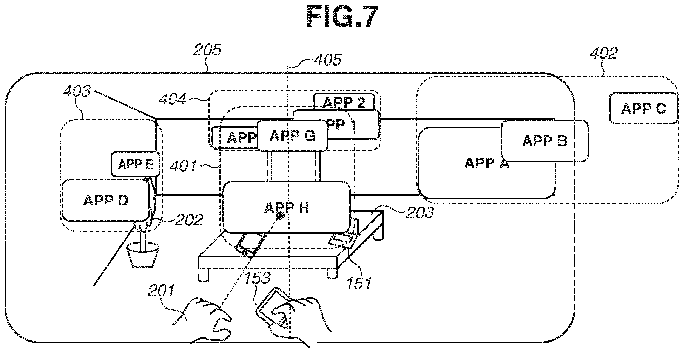

Fig. 7 illustrates the state of the display of the display 105 when the user holds the mobile terminal 153 in their hand from the state in Fig. 4D in the second embodiment. The virtual screen group 401 operating in the mobile terminal 153 is moved to the front, and the virtual screen group 404 operating in the HMD 150 that has previously been placed at this location is moved to the back of the virtual screen group 401. More specifically, priority is given to applications regarding (associated with) a device held in the hand of the user over applications operating in a head-mounted display. The movement of the applications to the front is an example of a method for giving priority to the applications, and another method for giving priority to the applications may be employed.

In a case where the mobile terminal 153 is moved away in the back direction from the state in Fig. 7, or the mobile terminal 153 is placed on the table 203, the virtual screen group 404 which has been in the back may move to the front.

In response to a change in the direction of the HMD 150 to the right direction as illustrated in Fig. 6, together with the applications operating in the HMD 150, the applications operating in the mobile terminal 153 that the user holds in their hand or wears may also move.

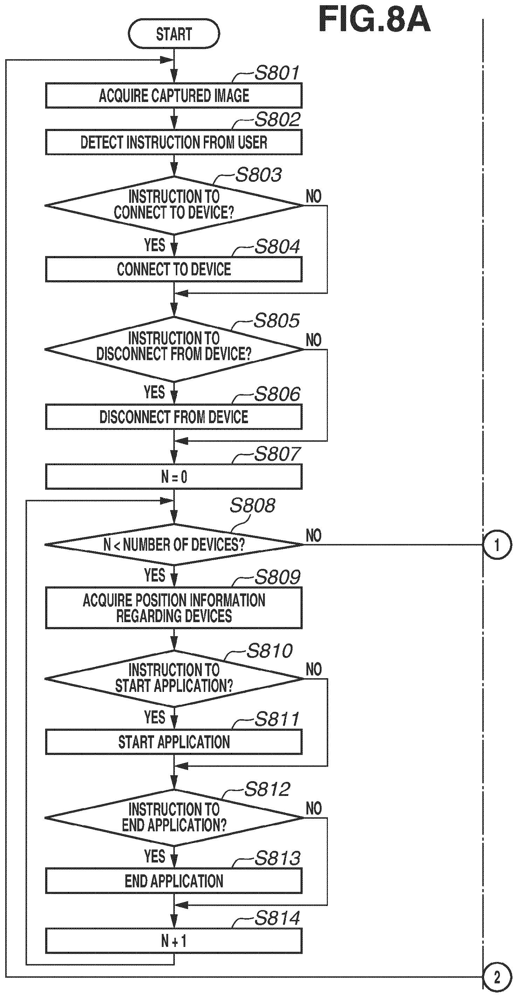

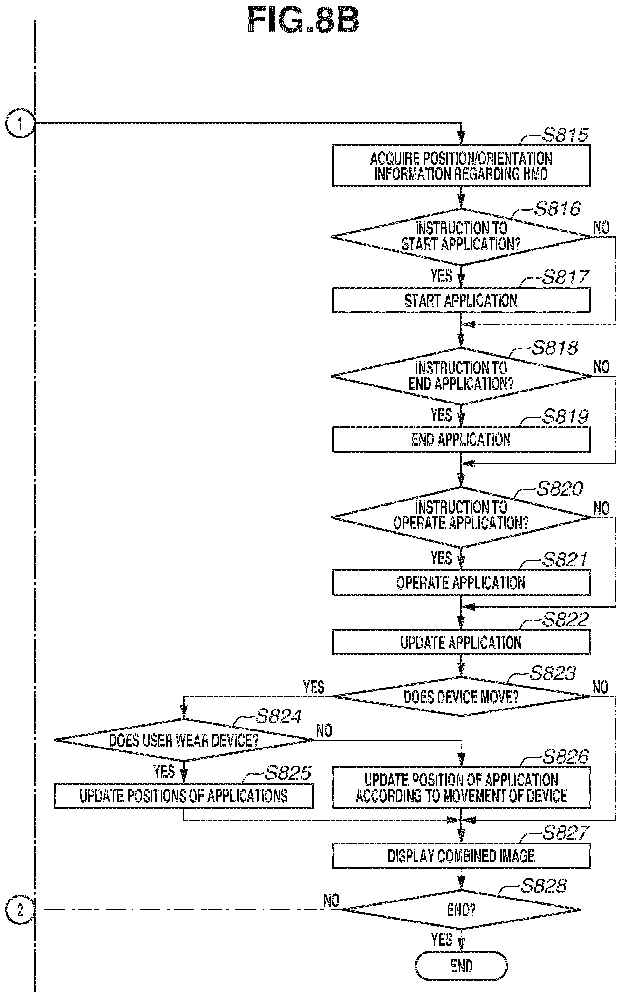

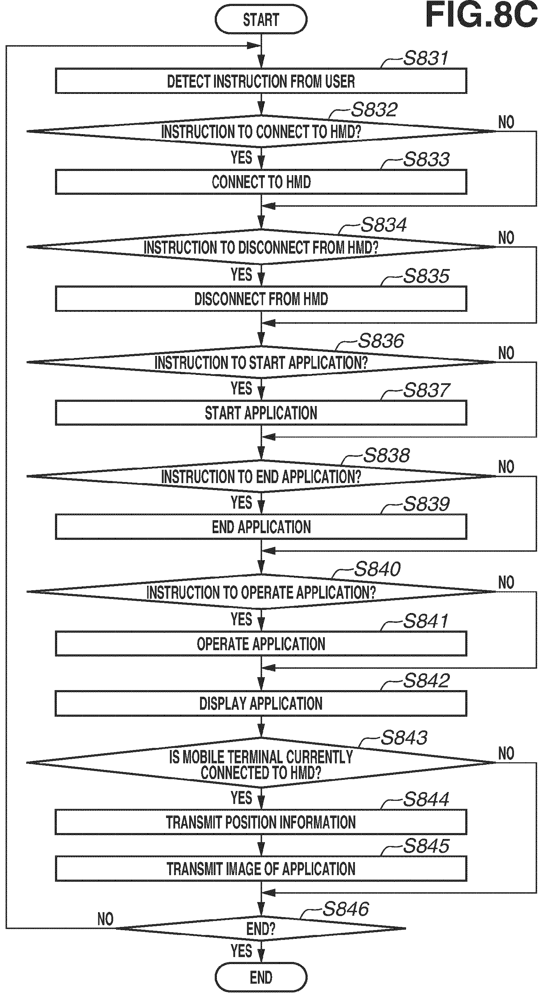

Figs. 8A and 8B are a flowchart illustrating the details of the processing of the HMD 150 according to the present embodiment. Fig. 8C is a flowchart illustrating the details of the processing of the mobile terminals 151, 152, and 153 according to the present embodiment.

With reference to Figs. 8A and 8B, the details of the processing of the HMD 150 according to the present embodiment are described below. In the processing flow of the HMD 150, steps S801 to S823 are similar to steps S501 to S523 in Fig. 5, and therefore are not described. Steps S826 to S828 are similar to steps S524 to S526 in Fig. 5, and therefore are not described. Only steps S824 and S825, which are different from Fig. 5, are described.

In step S824, the control unit 102 determines whether the device (the mobile terminal) that is moving is a device worn by the user. In a case where the control unit 102 determines that the user wears the device that is moving (YES in step S824), the processing proceeds to step S825. In a case where the determination is not (NO in step S824), the processing proceeds to step S826. The determination of whether the device that is moving is a device worn by the user may be performed by, for example, detecting a device from the captured image acquired in step S801 and determining that the user wears the device, or may be performed based on information indicating that the distance between the position information regarding the device and the position information regarding the HMD 150 is less than a predetermined distance. In a case where the difference between a change in the position or the orientation of the HMD 150 and a change in the position or the orientation of the device is less than a threshold, it may be determined that the user holds the device. Possible examples of the case where the user wears the device include a case where the user holds the device, a case where the user wears the device on their neck, and a case where the user has the device in their clothes pocket.

In step S825, the control unit 102 updates the positions of the applications, and the processing proceeds to step S827. The control unit 102 checks the positional relationships among the applications operating in the device that the user wears according to the determination in step S825 and the applications operating in the HMD 150. In a case where the positional relationships among these applications are such that the applications are at the corresponding positions, the control unit 102 updates the data list in Fig. 3B in such a manner that the applications operating in the device that the user wears according to the determination are moved to the front.

The processing flow of the device is similar to that in Fig. 5B, and therefore is not described.

In a case where the direction of the HMD 150 is changed in the right direction in Fig. 6 with the user holding a device in their hand, the virtual screen group regarding (associated with) the device that the user holds in their hand may also move together. The determination of the movement may also be performed in step S826.

As described above, according to the present invention, the operability of a virtual screen for a user of an information processing device is improved.

The present invention can also be realized by executing the following processing. Software (program) for realizing the functions of the above-described embodiments is supplied to a system or an apparatus via a network or various storage media, and causing a computer (or a control unit or a micro processing unit (MPU)) of the system or the apparatus to read and execute the program code. In this case, the program and the storage medium storing the program constitute the present invention.

Although the present invention has been described in detail in reference to the above embodiments, the present invention is not limited to these specific embodiments, and various modification and forms within the scope of the invention as understood by the skilled person with reference to the appended claims are also included. Some of the above-described embodiments may be combined, in part or in whole, as appropriate.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card, and the like.

While the present invention has been described with reference to embodiments, it is to be understood that the invention is not limited solely to the disclosed embodiments. The scope of the following claims is to be accorded the broadest interpretation so as to encompass all such modifications and equivalent structures and functions as would be understood by the skilled person.

## Claims

1. An information processing device (150) configured to communicate with a mobile terminal (151, 152, 153), the information processing device comprising:
display control means (102) configured for controlling a display (105) to display a virtual space where a virtual screen associated with the mobile terminal is placed in a real space; and
instruction acquisition means configured for acquiring an instruction to place the virtual screen (401, 402, 403, 404) associated with the mobile terminal in the virtual space,
wherein the display control means is configured to change, in a case where a movement of the mobile terminal is detected, a position of the virtual screen associated with the mobile terminal within the virtual space is displayed to a position corresponds to a position of the mobile terminal, the movement of which is detected.

2. The information processing device according to claim 1, wherein the display control means is configured to change, in a case where there is a plurality of mobile terminals, in response to at least one mobile terminal of any of the plurality of mobile terminals being moved, positions where virtual screens each associated with a different one of the plurality of mobile terminals are displayed, according to positional relationships among the plurality of mobile terminals.

3. The information processing device according to claim 1 or claim 2, wherein the display control means is configured to change, in a case where there is a plurality of mobile terminals, in response to at least one mobile terminal of any of the plurality of mobile terminals being moved, positions where virtual screens associated with the plurality of mobile terminals are displayed in such a manner that the virtual screens are arranged in clusters, each cluster being associated with a different one of the plurality of mobile terminals according to positional relationships among the plurality of mobile terminals.

4. The information processing device according to claim 2 or claim 3, wherein the display control means is configured to display, in a case where there is a plurality of virtual screens associated with a predetermined mobile terminal among the plurality of mobile terminals, the plurality of virtual screens associated with the predetermined mobile terminal are displayed in an overlapping manner.

5. The information processing device according to any one of claims 1 to 4, wherein the display control means is configured to change, in response to movement of the mobile terminal, the position where the virtual screen associated with the mobile terminal is displayed and change a position where a virtual screen associated with the information processing device is displayed.

6. The information processing device according to any one of claims 2 to 5, wherein the display control means is configured to perform control in such a manner that a virtual screen associated with a mobile terminal which is on a right is displayed on the right, and a virtual screen associated with a mobile terminal which is on a left is displayed on the left.

7. The information processing device according to any one of claims 1 to 6, wherein the display control means is configured to perform control in such a manner that in a case where an orientation of the display is changed, a virtual screen associated with the information processing device is displayed such that the virtual screen moves according to the change in the orientation.

8. The information processing device according to any one of claims 1 to 7, wherein the display control means is configured to perform control in such a manner that in a case where the mobile terminal moves to outside of an imaging range of a captured image, the virtual screen associated the mobile terminal that moves to the outside of the imaging range is hidden or minimized.

9. The information processing device according to any one of claims 1 to 8, wherein the display control mean is configured to perform control in such a manner that in a case where a user wears the mobile terminal, the virtual screen associated with the mobile terminal worn by the user is displayed in a front.

10. The information processing device according to any one of claims 1 to 9, wherein the display control means is configured to perform control in such a manner that in a case where a user wears the mobile terminal, the virtual screen associated with the mobile terminal worn by the user is displayed such that the virtual screen moves according to a change in an orientation of the display.

11. The information processing device according to any one of claims 1 to 10, wherein the display control means is configured to display, in a case where the position of the mobile terminal is moved backward, a virtual screen associated with the information processing device is displayed in a position closer to the user than the virtual screen associated with the mobile terminal.

12. The information processing device according to any one of claims 1 to 11,
wherein the mobile terminal is a device including the display, and
wherein the display control means is configured to perform control in such a manner that in a case where the mobile terminal is placed face down such that the display of the mobile terminal is hidden, the virtual screen regarding the mobile terminal is hidden or minimized.

13. The information processing device according to claim 12, wherein the display control means is configured to perform control in such a manner that in a case where the mobile terminal is placed such that the display of the mobile terminal is visible from the state where the display of the mobile terminal is placed face down, the virtual screen associated with the mobile terminal is displayed.

14. The information processing device according to any one of claims 1 to 13, wherein the display control perform is configured to control in such a manner that in a case where an instruction to fix a position of a first virtual screen regarding a first mobile terminal is received, the position of the first virtual screen is not changed to a position corresponding to a position of the first mobile terminal, the movement of which is detected, even in a case where the first mobile terminal is moved.

15. The information processing device according to any one of claims 1 to 14, wherein the display control means is configured to maintain, in a case where the position where the virtual screen is displayed is changed, a front/back relationship of the virtual screen

16. The information processing device according to any one of claims 1 to 15, further comprising:
line-of-sight acquisition means configured for acquiring a line of sight of a user, and
wherein the display control means is configured to perform control in such a manner that in a case where the position where the virtual screen is displayed is changed, a virtual screen to which the line of sight of the user is directed among virtual screens displayed on the display is displayed in front of the user.

17. The information processing device according to any one of claims 1 to 16, wherein the display control means is configured to perform control in such a manner that in a case where positions where a plurality of virtual screens associated with the mobile terminal is displayed are changed, the plurality of virtual screens is displayed based on front/back relationships determined among the plurality of virtual screens according to priorities determined in advance.

18. The information processing device according to any one of claims 1 to 17, further comprising:
image acquisition means configured for acquiring a captured image,
wherein the display control means is configured to display an image of a mixed reality space obtained by combining the virtual screen regarding the mobile terminal and the captured image on the display.

19. An information processing device (105) configured to communicate with a mobile terminal (151, 152, 153), the information processing device comprising:
display control means (102) configured for controlling a display (105) to display a virtual space where a virtual screen associated with the mobile terminal is placed in a real space,
wherein in a case where an application associated with the mobile terminal is started, the display control unit is configured to place a virtual screen of the application regarding the mobile terminal in the virtual space.

20. The information processing device according to claim 19, wherein in a case where the application associated with the mobile terminal is started, the display control unit is configured to place the virtual screen of the application associated with the mobile terminal at a front in the display.

21. The information processing device according to claim 19 or 20, further comprising:
instruction acquisition means configured for acquiring an instruction to change a position where the virtual screen regarding the mobile terminal is placed,
wherein based on the instruction acquired by the instruction acquisition unit, the display control unit is configured to change a position of the virtual screen of the application regarding the mobile terminal.

22. The information processing device according to any one of claims 19 to 21, wherein the display control means is configured to change, in a case where a movement of the mobile terminal is detected, a position where the virtual screen associated with the mobile terminal placed in the virtual space is displayed to a position corresponding to a position of the mobile terminal, the movement of which is detected.

23. A control method of an information processing device configured to communicate with a mobile terminal, the control method comprising:
a display controlling step for controlling a display to display a virtual space where a virtual screen associated with the mobile terminal is placed in a real space; and
an instruction acquiring step for acquiring an instruction to place the virtual screen associated with the mobile terminal in the virtual space,
wherein in the display controlling step, in a case where a movement of the mobile terminal is detected, a position where the virtual screen associated with the mobile terminal placed in the virtual space is displayed is changed to a position corresponding to a position of the mobile terminal, the movement of which is detected.

24. A computer program comprising instruction, which when executed by a computer, causes the computer to function as the means of the information processing device according to any one of claims 1 to 22 or performed the control method of claim 23.

25. An information processing system comprising:
a mobile terminal;
a display;
a display control device configured for controlling the display to display a virtual space where a virtual screen associated with the mobile terminal is placed in a real space; and
an instruction acquisition device configured for acquiring an instruction to place the virtual screen associated with the mobile terminal in the virtual space,
wherein in a case where the display control device is configured to detect a movement of the mobile terminal, the display control device is configured to change a position where the virtual screen associated with the mobile terminal placed in the virtual space is displayed to a position corresponding to a position of the mobile terminal, the movement of which is detected.
